# EUROPEAN PATENT APPLICATION

(11) **EP 1 584 753 A1**
(43) Date of publication of application: **12.10.2005**
(21) Application number: 04008467.5
(22) Date of filing: 07.04.2004
(51) Int. Cl.: E02F 5/28, E02F 3/92, E02B 3/02

(54) **Method for removal of sand**

(71) Applicant: Brewaba Wasserbaugesellschaft Bremen mbH, 28207 Bremen (DE); Koninklijke BAM Groep nv, 3981 AZ Bunnik (NL)
(72) Inventor: van Wiljen, Leendert, 4128 LZ Lexmond (NL)
(74) Representative: Maiwald, Walter

(57) **Abstract**

The invention concerns a method for mining sand or gravel from a sand or gravel deposit at the bottom of a body of water, comprising the following steps:
i) providing mining machinery capable of conveying sand or gravel from a mining position at the bottom of said water to a desired location, said mining position being at a level relatively lower than the upper limit of said deposit of sand or gravel to be mined;
ii) providing water injection means capable of injecting water into the sand or gravel deposit
iii) injecting water into said deposit by said injection means, in an amount and at a rate selected so that the sand or gravel and the injected water form a liquefied layer, said liquefied layer being capable of flowing under the influence of gravity from the place of said deposit to the lower level mining position, and
iiii) mining said sand or gravel by means of said mining machinery, after said sand or gravel has flown from said deposit to said mining position.

## Description

The invention concerns methods for mining sand or gravel from a sand or gravel deposit at the bottom of a body of water. The invention further concerns methods for removing sand or gravel from such a deposit to a different position of the bottom of a body of water, without mining the sand or gravel.

The bottoms underneath both naturally occurring and artificially created bodies of water, including rivers, lakes, sees and oceans as well as harbours, marinas etc., can consists of a variety of materials including bedrock, sand, silt and mud. These materials differ widely in their properties; rock, sand and gravel are usually relatively heavy, high specific weight materials including minerals such as quartz with specific weights up to around 5 p/cm³ or more. By contrast, mud largely consists of decaying organic matter, with a specific weight close to 1.

Particle sizes of materials forming water body bottoms also differ widely. E.g. sand can go from very fine material, with typical grain diameters below 0.2 mm, to coarse sand with average grain size between 1 mm and 2 mm. Generally, gravel has even bigger average particle diameters. Typical sand and gravel particles may be of a more or less rounded, often even almost spherical shape. On the other hand, typical mud particles will be flat or of irregular shape.

These differences have major effects on the mobility of such materials when exposed to e.g. current or gravity. High density, low surface area, round grains of sand are much less capable of floating than low density, large surface area, irregular mud and silt particles. Thus, sand grains and, even more pronouncedly gravel stones or pebbles, will not be carried by a water current to the extent that mud particles are.

Another major difference between these water body bottom materials is their usefulness. Generally, sludge, silt and mud are, at best, bottom materials without any economic usefulness. At worst, they are deposited in areas where their presence is undesired. The silting-up of harbours, basins, lakes and rivers and even see shore areas is a well known problem in shipping, where a specified depth of the water body is required to accommodate correspondingly sized vessels. It is a well know problem that rivers, harbours, marinas etc. have to be repeatedly dredged, to remove the continuously re-building mud and sludge deposits at their bottom.

While this can be a problem with sand and gravel too, these materials are not just problematic or at best, irrelevant; sand and gravel form desirable raw materials for the building industry and are, for this purpose, mined on an industrial level, worldwide. Submarine sand and gravel deposits are a valuable source of such building materials, and are exploited for this purpose.

Various techniques have been disclosed for producing such materials. Thus, sand and gravel are mined from the sea floor. Established mining methods generally involve the use of mining machinery which can move across the sand or gravel deposit to be mined, in a way comparable to use of machinery in opencast mining on dry land.

Dredging machinery is used for removal of sand, gravel, sludge or mud from places where corresponding deposits hamper shipping operations. Known methods involve the use of dredging machinery such as bucket dredgers, bucket cranes etc. The removed material is often either placed on ships for dumping elsewhere, or is conveyed to some onshore location for deposition.

Where substantially clean sand and gravel are mined, it is generally not a problem that in the course of this mining, some of the mined material is released into the body of water. Sand and gravel settle again very quickly, because of their high specific weight and the generally rounded shape of the individual grains. Any turbidity caused by the mining operation is generally not lasting. Further, sand and gravel do not enter any chemical reactions under such conditions, and thus do not consume oxygen from the body of water before the sand or gravel settles again.

However, in the removal of silt, sludge and mud, the contamination of the body of water by particles of the removed material, caused by the dredging operation, is a massive problem. On the one hand, the particles are generally very small and also of a specific weight close to that of the surrounding water, so that they settle only very slowly. Further, these materials comprise major amounts of organic matter, which is oxidized when dispersed, and the oxygen consumption caused by this process reduces the amount of oxygen available to living organisms, especially fish.

While it has been suggested in the prior art (e.g. DE-A-1 634 017, GB-A-595 291 and US-A-3,414,862) to deliberately disintegrate mud or sludge bottom layers by the injection of water and/or air, in the hope that a sufficiently strong water flow or a current will then carry the sludge or mud particles away, these methods have not been consistently successful. One reason is of course that their use is limited to such bodies of water, where there is a sufficient flow or current to carry the redispersed particles off to a place far enough away where they may resettle. By definition, such methods are therefore not usable for areas where such flow is insufficient or even absent, e.g. harbours, marinas, lakes etc..

But even where there is sufficient flow or a current, the above-discussed problem of oxygen consumption by the redispersed organic matter remains a problem, and generally prevents the use of these methods, even where the general conditions of flow or current would be favourable.

A suitable method for removing sludge or mud without redispersal is described in EP-B-0 119 653. Basically, a sludge or mud layer is liquefied by the injection of water. In this, water jet nozzles are inserted directly in the mud layer and the amount of water injected as well as the rate of injection, are selected so that disintegration of the mud layer is prevented. Instead, only the volume of the layer is increased, by the injected water, which makes it possible that the liquefied layer flows under the influence of its (slightly) higher specific weight, along the water body bottom on which it rests, but substantially without mixing with the supernatant water.

Tests have shown that such liquefied mud layers may flow down suitably sloped riverbeds for more than 30 km without disintegrating, until the liquefied mud layer loses so much of the injection water that it becomes immobile again. In the final stage, the layer basically reverts to its pre-injection state, or reaches an area of the water body where there is sufficient water flow or current, to disintegrate the layer and carry the particles away. This known method is preferably practised where the territory, due to its natural inclination, already provides a flow path for the liquefied layer. This is e.g. true in many rivers, or where a harbour basin gets continually deeper towards the harbour mouth. In such cases, the liquefied mud layer can flow away from the original site, to its desired new position, as caused by its specific weight, under the influence of gravity.

Where such a natural flow path is not present, EP 0 119 653 suggest to create a channel, e.g. by dredging, along where the liquefied layer may then flow towards its final destination.

For the relatively rare cases where there is no flow or current above the mud to be removed, and the liquefied layer cannot reach another part of the water body where flow or current is sufficient to disintegrate the layer, EP 0 119 653 suggest to provide wells or recesses in the bottom, wherein a suction pressure pump is placed. The purpose is to make the mud flow towards this pump, which then conveys it towards a storage yard, to some other transportation means, or just to another location where the flow is sufficient.

In the prior art, the water injection method of EP 0 119 653 has been widely practised for the removal of sludge and mud. It appears, however, that it has not been used for moving sand or gravel. The most important reason is probably that the method appears, at first sight, to be unsuitable for such purposes. Sand and gravel have a much higher density than sludge and mud particles, and generally consist of much bigger particles too. The much bigger size, the shape and the much higher specific weight of sand and gravel grains makes it appear almost impossible that these materials could retain injected water to form a liquefied layer, capable of persisting long enough for any useful application.

Further, sand and gravel deposits usually don't create the kind of oxygen depletion and general contamination problems caused by the disintegration of sludge or mud layers, so that more conventional handling methods, especially the use of customary dredging apparatus, is not so problematic.

However, both in the mining and in the removal of sand and gravel, the use of such customary machinery, including mechanical excavators, suction pressure dredgers, bucket dredgers, etc., is accompanied by disadvantages, especially in terms of production capacity and correspondingly high operational costs. Thus, in sand and gravel mining, it would be much more cost efficient if the sand or gravel could be moved towards (more or less) stationary mining device, instead of having to move the mining machinery across sand or gravel beds.

Also in the removal of sand or gravel to another place at the bottom at the water body, it would be much more cost efficient if this could be done without having to dredge the material in the conventional fashion, which generally includes transportation by barge and discharge elsewhere, since this implies shipping materials with a high water content, which is inefficient and expensive.

It is therefore a primary objective of the instant invention, to provide a more efficient method of mining sand or gravel from the bottom of a body of water.

It is another major objective of the instant invention to provide a more efficient method for removing sand or gravel to a different position at the bottom of a body of water.

Further objectives and advantages of the invention will become apparent from the ensuing description of preferred embodiments.

In the context of this description, "sand" means a more or less loose accumulation, agglomerate or aggregate of separate mineral grains ranging from approximately 0.05 to 2 mm in largest diameter. Most commonly, these grains will consist of quartz, but the usage of "sand" in this invention is preferably not limited to quartz.

In a preferred embodiment of the invention, "sand" comprises fine sand from approximately 0.05 up to 0.2 mm largest grain diameter.

In other preferred embodiments, "sand" means medium size grains, with largest grain diameters up to 0.6 mm.

In yet another preferred embodiment, "sand" means coarse sand with largest grain diameters up to 2 mm.

"Diameter" is largest diameter, unless otherwise specified.

The sand of this invention is commonly sand as it naturally occurs at the bottom of river beds, sea beds, lakes etc.. This is often sand that has been shifted by the action of water over extended time periods, so that the individual grains are generally rounded. However, the invention is not limited to this, and in other preferred embodiments also applies to the handling (be it for mining, be it just for removal purposes) of sand that was originally part of solid ground and only became exposed by the removal of overlying materials, e.g. by mining. Thus, the invention also applies to sand with sharp edges and irregular grain shapes.

"Gravel" in the context of this invention is generally also an accumulation, agglomeration or aggregation of individual mineral particles which, however, are generally bigger than the grains of sand. Generally, these particles will be above 2 mm in largest diameter. As with sand, gravel stones or "pebbles" may have been rounded by the action of moving water, but this is not an obligatory requirement of this invention.

Gravel will often comprise quartz particles, but preferably is not limited to quartz.

"Mining" in the context of this invention means the process of extraction and recovery of the material concerned, which in this case is sand or gravel, with the purpose of making it available for applications such as use in the building industry, in road construction, in the fabrication of artificial stones etc.. In the context of the invention, "mining" is used in the context of extraction and recovery of sand or gravel from corresponding deposits which occur at the bottom of a body of water.

A "body of water" in the context of the invention can be any naturally occurring or artificially created body of water, with a size large enough to permit mining and or removal operations of the type discussed herein. Specifically, such bodies of water include rivers, lakes, sea beds, ocean beds and basins, (especially in costal areas), but also harbours, marinas, and artificially created water basins.

"Mining machinery" in the context in this invention includes conventional devices capable of conveying sand or gravel, which can be operated for under water excavation of these materials. Thus, mining machinery includes bucket conveyers, bucket cranes, suction pressure pumps and other such known means for excavating and conveying sand and gravel.

"Water injection means" in the context of this invention includes all types of apparatus which can be used to create a liquefied layer, including the liquefied layers disclosed in

EP 0119 653, substantially without disintegrating and dispersing the solid material into the supernatant body of water, such that the thus-formed liquefied layer can flow under the influence of gravity, to a different position at the bottom of the body of water, again substantially as described in EP 0 119 653.

In preferred embodiments, water injection means can comprise the kind of water injection apparatus described in EP 0 119 653, especially where the tube and injection nozzles arrangement is concerned, that is used to transport the injection water from the injection pump to the bottom layer into which the water is injected.

The water injection means generally comprises a mobile carrier such as a ship or a float, on which the complete machinery for water injection can be mounted.

Basically, the water injection means can be the same, both for mining and for removal operations. The major difference between these two operations is that for mining, the sand or gravel is caused to flow, as a liquefied layer, to the mining position where the mining machinery is located, whereas in removal operations, the sand or gravel is caused to flow to some position where it can settle and remain, on the bottom of the body of water, without being in the way of shipping etc. or can be dispersed and removed by a current.

In both mining and removal operations, the place to which the liquefied sand or gravel layer flows can be determined by the natural inclination of the bottom over which the layer flows. Alternatively, a suitable flow path can be artificially generated by correspondingly preparing the bottom of the body of water, for example by initial excavation of a desired flow path. Since sand and gravel can usually be excavated without creating substantial contamination problems, this is often feasible and can, in a mining operation, in fact be the first step of recovery of the desired sand or gravel.

In such preparatory operations, the methods disclosed in more detail in EP 0 119 653 may be used with advantage. Specifically, this concerns the steps or stages in creating one or more paths or strips, be it by excavation, be it by injection, to generate the desired flow.

The apparatus disclosed in EP 0 119 653 may be used for these purposes.

In a preferred embodiment relating to the mining of sand from a seafloor deposit, the sand to be mined is found in an area close to the sea shore, at a depth of some meters below the sea surface, and in a generally flat (although preferably inclined) area of the sea floor.

Initially, the necessary mining machinery is brought into position. In the embodiment example, the mining machinery comprises a suction pump, the inlet of which is positioned adjacent to the sand deposit, and the outlet of which is connected to a suitable pipe, which extends from the position of the mining pump to the shore and further to an intermediate storage area on the shore, from which the sand can be carried off by means of trucks etc.

Initially, a well is created in the sand deposit, and the pump is placed with its inlet near the bottom of said well, so that the pump sucks in any sand flowing into the well, and conveys it to said storage position on the shore.

A water injection means is provided in the form of a ship, with injection apparatus generally shown in EP 0 119 653. Specifically, the ship has a transverse tube with a row of water jet injection nozzles, which is connected to an injection pump, and which can be lowered down onto the sand deposit. A pump is provided for providing the water injection nozzles with water under sufficient pressure for injection, which the pump takes from the body of water, through an inlet carried by the vessel at a suitable distance from the locus of water injection.

Lifting means are provided for lowering the transfer tubes with the injection nozzles down on to the sand deposit, or lifting it up from said position, e.g. for travel. In operation, the transverse tube with the injection nozzles is lowered, in a generally horizontal position, onto the sand deposit, so that the exit apertures of the injection nozzles are in direct contact with the sand surface. Water is now injected into the sand, in an amount and at a rate suitably controlled by the setting of the pump, so that the sand is transformed into a liquefied layer.

In the embodiment example, this water injection starts in the immediate vicinity of the well, where the mining means are placed. This causes that part of the sand closest to the well, to flow into that well, where it is sucked in by the mining pump, and conveyed to the onshore storage position.

Subsequently, the ship carrying the water injection means moves away from the well, causing the water injections means to inject water into a part of the sea floor bottom sand which lies adjacent to the area which has already been subjected to water injection, and which now lies at a lower level, because sand has already been removed from it into the well. Therefore, newly injected sand will flow to that lower level and from there into the well, and this will continue while the ships keeps moving away from the well. This is of course provided that the bottom around the well is sufficiently level and horizontal. Depending on the actual shape of the sea floor bottom near the well, the ship may continue moving away from the well, until the difference in level is not sufficient anymore for the liquefied layer to flow to the well under gravity. When this happens, the ship will go back to near the well and start its operation again, either deepening the first flow path it has already cut into the sand deposit, or starting at a new position spaced away from the original starting position, to cut a new flow path.

It will be appreciated that depending on the actual conditions at the mining site, the water injection vessel may perform its injection operation all around the well, or only partly around the well.

In any case, this operation will make it possible to provide the mining machinery with a more or less continuous supply of sand from the vicinity of the well, without having to move the mining machinery. The advantages of this will be the more pronounced, the more difficult to move the mining machinery is.

It will be understood that if the sand deposit is sufficiently thick, this operation can be prolonged by suitably deepening the mining well, once the sand deposit around the well has been depleted so much that the original well does not lie at a low enough level anymore, which makes it possible to repeat the water injection procedure and recover more sand.

Surprisingly, it has been found that sand, even coarse sand, is capable of forming a liquefied layer of the type discussed above, capable of flowing over many tens, up to several hundred meters of flow path. This means that areas up to many hundreds of square meters can be mined without changing the position of the mining well.

With gravel, the procedure is basically the same, only the possible length of the flow path is shorter.

In another embodiment example, a sand deposit is to be removed from its position on a river bed, to another position where it does not impede shipping. In this embodiment example, said other position lies naturally at a lower level than the initial position of the sand deposit.

It is therefore possible to use the same type of water injection means as in the above discussed first embodiment example, for initially converting the top layer of the sand deposit into a more liquefied, flowable layer, which can then flow under gravity, to said final position where it can remain.

Again, water injection will start at that end of the sand deposit adjacent to the (natural) flow path of the liquefied layer. Thus, the sand forming this end area of the deposit is initially injected, and the liquefied layer created by this injection then starts to flow down the flow path, to its final destination. From this position, the vessel carrying the water injections means will then move in such a direction, that other parts of the sand deposit, adjacent to the position where the initial injection occurred, will be subjected to water injection, much as above described in the first embodiment example. This procedure will continue until either the vessel has reached the position where further injection would not cause the sand to flow in the desired direction, or if the extreme end of the sand deposit, most remote from the flow path, is reached.

The vessel will, in this embodiment, go back to its original starting position for a repetition of the injection procedure, until enough of the sand has been removed. In this, the vessel may initially deepen the first cut made into the sand deposit further, before moving sideways to remove other parts of the sand deposit, or it may follow a different injection pattern, depending on the shape and place of the sand deposit to be removed.

Again, basically the same approach applies to the removal of gravel, only with the possible length of the flow path, of the liquefied gravel layer, being somewhat shorter than the possible flow path of a comparable liquefied sand layer.

In another embodiment, there is no final position for the sand to be removed, to which the sand could flow along a natural inclination. In this embodiment, a flow path has to be initially created, and this is done using conventional machinery such as a dredger. By this procedure, a trench is initially created; if a major amount of sand or gravel is to be removed, a series of such trenches may be created more or less in parallel, or in some other suitable position to each other.

The water injection means is then used to wash the sand or gravel to be removed from its original position into the adjacent trench or trenches, and for this purpose, the sand is transformed into the liquefied layer, as above described in the other embodiments, so that it then can flow under gravity down to the preformed trench. It will be understood that for this purpose, the preformed trenches need to be of a volume and need to be placed in such a position, that they can in fact accommodate the sand or gravel to be removed.

While the invention has been described with reference to several embodiment examples, it will be understood that it is not limited to these embodiment examples, which are just preferred ways of operating the invention.

## Claims

1. A method for mining sand or gravel from a sand or gravel deposit at the bottom of a body of water, comprising the following steps:
i) providing mining machinery capable of conveying sand or gravel from a mining position at the bottom of said water to a desired location, said mining position being at a level relatively lower than the upper limit of said deposit of sand or gravel to be mined;
ii) providing water injection means capable of injecting water into the sand or gravel deposit
iii) injecting water into said deposit by said injection means, in an amount and at a rate selected so that the sand or gravel and the injected water form a liquefied layer, said liquefied layer being capable of flowing under the influence of gravity from the place of said deposit to the lower level mining position, and
iiii) mining said sand or gravel by means of said mining machinery, after said sand or gravel has flown from said deposit to said mining position.

2. The method of claim 1 wherein the liquefied layer is formed substantially without dispersing sand or gravel into the body of water beyond the upper limit of said layer.

3. The method of claim 1 or 2 wherein said mining machinery comprises a convey or means such as a bucket chain conveyor or a suction pipe conveyor.

4. The method of any one 1 to 3 wherein said mining machinery is used to establish said lower level of said mining position with respect to the upper limit of said deposit.

5. The method of any preceding claim, said sand having an average grain size of up to 0.2 mm largest diameter.

6. The method of any preceding claim, said sand having an average grain size of up to 0,6 mm largest diameter.

7. The method of any preceding claim, said sand having an average grain size of up to 1,2 mm largest diameter.

8. The method of any preceding claim, said sand having an average grain size of up to 2 mm largest diameter.

9. The method of any preceding claim, said sand having an average grain size of at least 0,1 mm largest diameter.

10. The method of any preceding claim, said sand having an average grain size of at least 0,3 mm largest diameter.

11. The method of any preceding claim, said sand having an average grain size of at least 1 mm largest diameter.

12. The method of any one of claims 1 to 4 said, gravel having an average particle size of above 2 mm in largest diameter.

13. The method of any preceding claim, said sand or gravel being substantially free from mud or silt particles.

14. The method of any preceding claim, said water injection means comprising a support structure provided with a plurality of water jet nozzles.

15. The method of claim 14, said injection means further comprising a mobile carrier for said support structure.

16. The method of claim 14 and 15, further comprising means for suspending the support structure in a position where the nozzles are either at least partly inserted into the sand or gravel deposit for direct water injection, or the nozzles are held at a distance obove said deposit, said distance being small enough to permit water injection into the deposit sufficient to form the liquefied layer.

17. The method of claim 15, wherein said mobile carrier is a ship or a float.

18. The method of any one of claims 14 to 17, wherein the injection water is supplied to said nozzles by a pump, and supplied to the pump from said body of water.

19. A method for removing sand or gravel from a sand or gravel deposit at the bottom of a body water, comprising the following step:
i) providing water injection means capable of injecting water into the sand or gravel deposit;
ii) injecting water into said deposit by said injection means, in an amount and at a rate selected so that the sand or gravel and the injected water form a liquefied layer, said liquefied layer being capable of flowing under the influence of gravity from the place of said deposit to a desired position lying at a level relatively lower than the upper limit of said deposit, and
iii) permitting the sand or gravel to settle from that liquefied layer at said desired position.

20. The method of claim 19, wherein the liquefied layer is formed substantially without dispersing sand or gravel into the body of water beyond the upper limit of said layer.

21. The method of claim 19 or 20, said sand having an average grain size of up to 0.2 mm largest diameter.

22. The method any one of claims 19 to 21, said sand having an average grain size of up to 0,6 mm largest diameter.

23. The method of any one of claims 19 to 21, said sand having an average grain size of up to 1,2 mm largest diameter.

24. The method of any one of claims 19 to 21, said sand having an average grain size of up to 2 mm largest diameter.

25. The method of any one of claims 19 to 24, said sand having an average grain size of at least 0,1 mm largest diameter.

26. The method of any one of claims 19 to 24, said sand having an average grain size of at least 0,3 mm largest diameter.

27. The method of any one of claims 19 to 24, said sand having an average grain size of at least 1 mm largest diameter.

28. The method of any one of claim 19 to 24, said sand having an average grain size of at least 1 mm largest diameter.

29. The method of any one of claims 19 to 28, said sand or gravel being substantially free from mud or silt particles.

30. The method of any preceding claim, said water injection means comprising a support structure provided with a plurality of water jet nozzles.

31. The method of claim 30, said injection means further comprising a mobile carrier for said support structure.

32. The method of claim 30 or 31, further comprising means for suspending the support structure in a position where the nozzles are either at least partly inserted into the sand or gravel deposit for direct water injection, or the nozzles are held at a distance above said deposit, said distance being small enough to permit water injection into the deposit sufficient to form the liquefied layer.

33. The method of claim 31 or 32, wherein said mobile carrier is a ship or a float.

34. The method of any one of claims 19 through 33, wherein the level of said desired position is artificially generated.

35. The method of claim 34, wherein said desired position is generated by excavation.
